# EUROPÄISCHE PATENTSCHRIFT

(11) **EP 2 173 534 B1**
(45) Veröffentlichungstag und Bekanntmachung des Hinweises auf die Patenterteilung: **20.03.2019**
(21) Anmeldenummer: 08785227.3
(22) Anmeldetag: 30.07.2008
(51) Int. Cl.: B29C 49/42, B65G 47/90, B25J 15/04

(54) **BLASMASCHINE FÜR BEHÄLTER**
BLOW MOLDING MACHINE FOR CONTAINERS
MACHINE DE SOUFFLAGE POUR RÉCIPIENTS

(30) Priorität: 08.08.2007 DE 102007037400
(43) Veröffentlichungstag der Anmeldung: 14.04.2010
(60) Teilanmeldung: 18167577.8
(73) Patentinhaber: Krones AG, 93073 Neutraubling (DE)
(72) Erfinder: SCHÖNBERGER, Wolfgang, 93073 Neutraubling (DE)
(74) Vertreter: Grünecker Patent- und Rechtsanwälte PartG mbB
(86) Internationale Anmeldenummer: PCT/EP2008/006282
(87) Internationale Veröffentlichungsnummer: WO 2009/018952

(56) Entgegenhaltungen:
- EP-A- 1 743 733
- WO-A-02/064295
- WO-A-02/068300
- DE-A1- 2 538 169
- DE-A1- 3 527 105
- DE-U1- 20 302 387
- JP-A- 7 032 458
- JP-A- 60 071 149
- JP-A- 61 063 438
- US-A- 3 339 230
- US-A- 4 456 447

## Beschreibung

Die Erfindung betrifft eine Blasmaschine gemäß Oberbegriff des Patentanspruchs 1.

In Streck-Blasmaschinen für Kunststoffflaschen werden vorgefertigte Preforms in einer Förderstrecke durch eine Heizstation gefördert, ehe sie in der Blasstation verarbeitet werden. Jede Preform ist bereits mit einer Mündung ausgebildet, die zumindest im Wesentlichen der Mündung der fertigen Flasche entspricht, und wird in der Förderstrecke an dieser Mündung von einem eingesteckten Preformdorn gehalten. Der Preformdorn ist am in der Förderstrecke montierten Dornhalter tauschbar festgelegt. Da es viele verschiedene Behältertypen, beispielsweise Flaschen, mit unterschiedlichen Mündungen herzustellen gilt, muss die Blasmaschine zum Wechsel auf Preforms mit einer anderen Mündung umgerüstet werden. Der Preformdorn passt nämlich sehr genau in die Mündung und ist deshalb nicht für unterschiedliche Mündungstypen geeignet. Bei einer in der Praxis eingesetzten Blasmaschine besteht die Kupplung aus einer frei endenden Hülse am Dornhalter und einem in die Hülse einsteckbaren Zapfen am Preformdorn. In der Hülse sind zwei diametral gegenüberliegende, jeweils schräg ansteigende Führungsbahnen mit einer Totpunkt-Nockenfläche ausgespart, in die am Zapfen angeordnete Stifte eingreifen. Zusätzlich ist eine Feder vorgesehen, die den Formschluss kraftschlüssig unterstützt. Zum Tausch eines Preformdorns wird bei angehaltener Förderstrecke mit der Hand oder einem Werkzeug am Preformdorn angegriffen, nach oben gedrückt, und dann um seine Längsachse verdreht, bis die Stifte aus den Führungsbahnen austreten. Umgekehrt wird beim Einsetzen eines neuen Preformdorns dieser mit den Stiften in die Führungsbahnen eingefädelt, dabei axial nach oben gedrückt, und bis zum Verriegeln verdreht. Da auf den Dornhalter und den Preformdorn beim Fördern erhebliche thermische Belastungen und Vibrationen einwirken, muss die Kupplung einen sicheren Halt des Preformdorns gewährleisten und deshalb eine relativ hohe Haltekraft generieren, die beim Wechsel überwunden werden muss. Die Handhabung ist mühsam, dauert relativ lang und erfordert erhebliches Geschick. Da in der Förderstrecke oftmals mehrere hundert Dornhalter angeordnet sind, dauert ein Wechsel unzweckmäßig lange.

Bei einer aus WO 02/068300 A1, die den Oberbegriff des Anspruchs 1 offenbart, bekannten Blasmaschine ist im jeweiligen Dornhalter auf der Einsteckaufnahmewand ein Topfkolben axial verschiebbar, der durch eine Druckfeder in Richtung zu seiner Sperrstellung und damit die Sperrstellung der Kugeln belastet wird. Der Topfkolben enthält einen ringförmigen Kugelfreiraum und eine kegelige Rampe. Der Dornzapfen weist eine Umfangsnut für den Eingriff der Kugeln in der Sperrstellung auf. Zum Lösen des Kugelgesperres wird der Topfkolben gegen die Kraft der Feder verschoben, sodass die Kugeln entlastet werden. Das Entnehmen des Dorns erfolgt unter Zug, wobei die Kugeln in den Kugelfreiraum im Topfkolben gedrückt werden. Das Einsetzen des Dorns erfordert zunächst das Verschieben des Topf-kolbens gegen die Feder, damit die Kugeln nachgeben, bis der Zapfen des Dorns mit seiner Umfangsnut auf die Kugeln ausgerichtet ist. Nach Loslassen des Topfkolbens schiebt die Feder den Topfkolben in die Sperrstellung, in der die Kugeln in die Umfangsnut des Zapfens gepresst werden.

Aus WO 02/064295 A1 ist ein in einem Spannfutter einer Werkzeugmaschine festlegbarer Werkzeughalter für jeweils ein Werkzeug bekannt. Das Werkzeug hat einen Schaft mit unrundem Querschnitt, beispielsweise mit längs verlaufenden Abflachungen und eine Umfangsnut. Der Werkzeughalter enthält ein Kugelgesperre am Umfang einer ebenfalls unrunden Querschnitt aufweisenden Werkzeugschaftaufnahme. Es sind zwei parallele Reihen Kugeln vorgesehen, die in Bohrungen der Schaftaufnahmewand radial beweglich sind, und zwar kleinere Kugeln zum Festlegen des Werkzeugs und größere Kugeln zum Verstellen der kleineren Kugeln zwischen einer Sperrstellung und einer Lösestellung. Auf einem Werkzeughalterfuß mit Konusflächen ist eine Außenhülse axial verschiebbar, die durch eine Druckfeder beaufschlagt ist. In der Außenhülse ist ein ringförmiger Kugelfreiraum vorgesehen, der durch gegensinnige kegelige Rampen jeweils für eine Kugelreihe begrenzt wird. Zum Einsetzen des Werkzeugs wird der Schaft des Werkzeugs bis zum Kontakt mit den größeren Kugeln in die Schaftaufnahme eingeführt. Die größeren Kugeln laufen an schrägen Rampen ab und verschieben die Außenhülse, bis die kleinen Kugeln in die Umfangsnut des Werkzeugschafts gepresst werden. Zum Entnehmen des Werkzeugs wird die Außenhülse verschoben, bis der Kugelfreiraum die kleineren Kugeln radial entlastet. Gleichzeitig werden die größeren Kugeln mit einer axialen Bewegungskomponente gegen das Ende des Werkzeugschafts gedrückt, um den Schaft anfänglich in der Schaftaufnahme zu lockern. Dann kann das Werkzeug entnommen werden.

Bei der aus US-A 3339230 bekannten Blasmaschine wird der Preformdorn durch eine Madenschraube im Dornhalter festgeklemmt, die einen lösbaren Klemmmechanismus im Dornhalter bildet. Die Madenschraube durchsetzt eine Bohrung in einer Wand des Dornhalters und greift in ein Sackloch einer viereckigen Platte am Preformdorn ein. Zum Wechseln des Preformdorns muss die Madenschraube aus der Sackbohrung entfernt und erst dann der Preformdorn aus dem Dornhalter herausgezogen werden.

Bei der aus DE-A 2538169 bekannten Blasmaschine wird der Preformdorn im Dornhalter durch eine lösbare Madenschraube festgeklemmt, die auch ein Antriebsritzel am oberen Ende einer Außenhülse des Preformdorns fixiert. Zum Wechseln des Preformdorns muss die Madenschraube entfernt werden. Der Preformdorn ist dann erst nach Abnahme des Antriebsritzels und eines kopfseitigen Federwiderlagers nach unten aus dem Dornhalter entnehmbar. Der Preformdorn weist auch eine Kupplung zum Festhalten des Preforms auf, die mit einem federbelasteten Kugelgesperre den mit Druck gegen die Federbelastung von unten eingeführten Preform fixiert. Das Kugelgesperre wird durch einen Stößel betätigt, der im Preformdorn relativ zum Dornhalter von einem Steuernocken gegen die Federbelastung entlang der Achse des Preformdorns verstellt wird.

Aus JP-A-7032458 ist eine Kunststoff-Schlauchspritzdüse bekannt, in deren Düsengehäuse ein Düsenring und ein innerer Düsenkern austauschbar jeweils mit einem Kugelgesperre festgelegt sind. Das Kugelgesperre für den Düsenring ist mittels einer verschiebbaren Hülse lösbar.

Auch bei dem Dornhalter gemäß US-A-4456447 wird der Preformdorn mittels einer Madenschraube festgeklemmt, die zum Entnehmen des Preformdorns mit einem Werkzeug gelöst werden muss.

Der Erfindung liegt die Aufgabe zugrunde, eine Blasmaschine der eingangs genannten Art anzugeben, deren Preform-Dornhalter bedienerfreundlich sind und außerordentlich kurze Wechselzeiten ermöglichen.

Die gestellte Aufgabe wird hinsichtlich der Blasmaschine mit den Merkmalen des Patentanspruchs 1 gelöst.

Durch die funktionelle Trennung der beiden Aufgaben, einerseits zuverlässig die hohe Haltekraft für den Preformdorn durch den Klemmmechanismus zu erzeugen, und andererseits das Löseelement zum Lösen des Klemmmechanismus so leichtgängig wie möglich und ergonomisch günstig zu betätigen, ist die Handhabung der Kupplung sehr bedienerfreundlich und lässt sich die Kupplung sehr rasch einrücken bzw. lösen. Das Löseelement lässt sich nämlich zum Lösen des Klemmmechanismus im Wesentlichen unabhängig von der Haltekraft leicht und nur über einen geringen Hub bewegen, bis der Preformdorn entnommen werden kann oder selbsttätig herausfällt, während bei nicht betätigtem Löseelement der Klemmmechanismus allein für die hohe Haltekraft sorgt. Dabei ist die Kupplung des Dornhalters ein Kugelgesperre, das baulich einfach, funktionssicher und leicht zu betätigen ist, dennoch die erforderliche hohe Haltekraft für den Preformdorn erzeugt, und wird nur das Löseelement relativ zum Dornhalter bewegt, um das Kugelgesperre zu lösen. Am Preformdorn braucht nicht angegriffen zu werden. Der Angriff des Löseelementes an dem Kugelgesperre lässt sich so gestalten, dass dieses trotz hoher Haltekraft mit relativ geringer Lösekraft und kleinem Hub bequem und rasch gelöst werden kann. Das Kugelgesperre hat ferner den Vorteil, das Einsetzen des Preformdorns durch einfaches Einstecken zu ermöglichen, ohne das Löseelement auch für diesen Vorgang benutzen zu müssen. Dies schließt nicht aus, dass dennoch ein Kugelgesperre verwendet wird, das auch zum Einsetzen des Preformdorns die Betätigung des Löseelementes erfordert.

Das Kugelgesperre hat mehrere in Umfangsrichtung verteilte Kugeln. Jede Kugel sitzt unverlierbar in einem Durchgang des Dornhalters, und zwar zwischen einer im Dornhalter in Abziehrichtung des Preformdorns schräg zur Achse des Dornhalters verlaufenden Fläche (Rampe oder konische Fläche) und der zum Einbringen eines Zapfens des Preformdorns an einem Ende offenen Dorn-Einsteckaufnahme des Dornhalters.

Damit die Kugel leicht beweglich und dennoch unverlierbar untergebracht ist, ist der dornhalterfest positionierte Durchgang eine sich von außen nach innen verengende Bohrung, vorzugsweise eine Senkbohrung, in die die Kugel eingreift und durch die sie mit ihrem Umfang teilweise bis in die Dorn-Einsteckaufnahme verlagerbar ist, um am Zapfen angreifen zu können. Die Senkbohrung wird in Bezug auf die Kugelkrümmung so gestaltet, dass die Kugel auch ein seitliches und axiales Spiel darin findet, wenn sie am Zapfen angreift. Die Haltekraft (in Drehrichtung und in axialer Richtung) wird über die Wand der Senkbohrung in den Dornhalter übertragen. Der Kugelfreiraum im Dornhalter ermöglicht die für die Funktion des Kugelgesperres erforderlichen Bewegungen jeder Kugel. Dabei ist das Löseelement eine vom einen Ende in den Kugelfreiraum eingreifende, verschiebbare Hülse, die auf der Wand des Dornhalters geführt wird und im Dornhalter ausziehfest abgestützt und auf die Kugel ausgerichtet ist. Die Hülse erstreckt sich von einem Ende des Kugelfreiraums bis über die jeweilige Kugel hinaus. Die Hülse enthält eine Öffnung für die Kugel, in der sich diese verlagern kann, wodurch die Hülse gegen Ausziehen aus dem Dornhalter abgestützt wird. Obwohl der Dornhalter im Regelfall hängend montiert ist, so dass die Hülse und/oder die Kugel ohnedies unter der Schwerkraft nach unten beaufschlagt sind, kann an der Hülse eine Feder angreifen, die die Hülse in Richtung zur Passivstellung des Löseelements beaufschlagt. Für die Feder reicht eine geringe Vorspannkraft aus, die bei der Betätigung des Löseelementes problemlos überwunden werden kann.

Besonders zweckmäßig wird das Löseelement aus einer Passivstellung, in der das Kugelgesperre selbsttätig wirkt, in etwa in Axialrichtung des Dornhalters relativ zum Dornhalter und auch relativ zum festgelegten Preformdorn in eine Lösestellung bewegt, worauf der Preformdorn leicht entnommen werden kann. Diese Bewegungsrichtung ist nicht nur manuell gut zu beherrschen, sondern auch speziell für einen maschinellen Angriff geeignet, beispielsweise durch einen Dornwechsel-Automaten oder -Halbautomaten.

Zweckmäßig sperrt der Klemmmechanismus nur in Trennrichtung des Preformdorns, während der Preformdorn ohne Betätigung des Löseelementes leicht in den Klemmmechanismus einsetzbar und darin festlegbar ist. Der Preformdorn wird allein durch das Einsetzen und ohne weitere Manipulationen festgelegt.

Bei einer zweckmäßigen Ausführungsform weist das Löseelement eine zwischen dem Dornhalter und dem Preformdorn nach außen ragende Handhabe auf, an der manuell oder maschinell angegriffen wird, um das Löseelement in die Lösestellung zu verstellen. Trotz der im Regelfall beengten Platzverhältnisse an der Förderstrecke einer Blasmaschine ist in diesem Bereich guter Zugriff möglich.

Bei einer alternativen Ausführungsform wird die axiale Bewegung des Löseelementes mittels eines beispielsweise am Dornhalter angeordneten Hilfselements bewerkstelligt, das beispielsweise als in etwa quer zur Axialrichtung betätigbarer Hebel oder Druckknopf ausgebildet ist und die Querbewegung in die Axialbewegung des Löseelementes umlenkt.

Bei einer zweckmäßigen Ausführungsform ist der Preformdorn mit einem Zapfen in einer Einsteckaufnahme des Klemmmechanismus festlegbar.

Um die Montage zu vereinfachen, ist, zweckmäßig, angrenzend an die jeweilige Kugelöffnung, in der Hülse außen ein O-Ring positioniert. Der O-Ring verhindert auf einfache Weise, dass bei der Montage oder Demontage die Kugeln herausfallen.

Bei einer baulich einfachen Ausführungsform ist die Handhabe ein nach außenstehender Ringflansch am freiliegenden Ende der Hülse. Um bei der Betätigung an der Handhabe gegebenenfalls die Übertragung von Drehkräften auf die Hülse und die Kugeln zu vermeiden, kann der Ringflansch relativ zur Hülse drehbar sein.

Mittels des Löseelementes ist eine bequeme und rasche Handhabung bei einem Tausch bereits bei manueller Betätigung möglich. Um die Wechselzeit noch weiter zu verkürzen und/oder zu vereinfachen, wird gemäß einem wichtigen Gedanken der Erfindung an der Förderstrecke zumindest ein das Löseelement bzw. dessen Handhabe betätigender Dorn- Wechselautomat oder -Halbautomat angeordnet. Dieser kann stationär oder seitlich an die Förderstrecke bringbar und/oder andockbar sein, oder sogar parallel zur Förderrichtung mitverfahren, um einen Preformdorn nach dem anderen oder jeweils gleich eine Preform- dorngruppe zu tauschen.

Bei einer zweckmäßigen Ausführungsform weist der Dorn-Wechselautomat oder - Halbautomat einen antreibbaren Betätiger (von Hand oder mittels eines pneumatischen, motorischen oder anderen Antriebs) auf, und vorzugsweise einen Dorngreifer, der den jeweiligen Preformdorn entnimmt oder einsetzt. Dem Dorngreifer sollte ein Magazin für Preformdorne zugeordnet sein, beispielsweise für einzusetzende oder entnommene oder einzusetzende und entnommene Preformdorne.

Nach einem weiteren wichtigen Merkmal kann zumindest ein Wechselautomat oder - Halbautomat zum Entnehmen und zumindest ein Wechselautomat oder -Halbautomat zum Einsetzen der Preformdorne vorgesehen werden. Dann können auch mehrere Magazine für entnommene und einzusetzende Preformdorne zugeordnet sein.

Anhand der Zeichnungen werden Ausführungsformen des Erfindungsgegenstandes erläutert. Es zeigen:
- Fig. 1: schematisch eine Behälter-Blasmaschine, die mit Preforms beschickt wird,
- Fig. 2: eine Perspektivansicht eines mit einem Preformdorn bestückten Dornhalters, beispielsweise für die Blasmaschine von Fig. 1,
- Fig. 3: einen Längsschnitt zu Fig. 2, mit angebrachtem Preform, und

Fig. 4 eine Schemadarstellung eines halbautomatischen bzw. automatischen Preformdom-Wechselsystems.

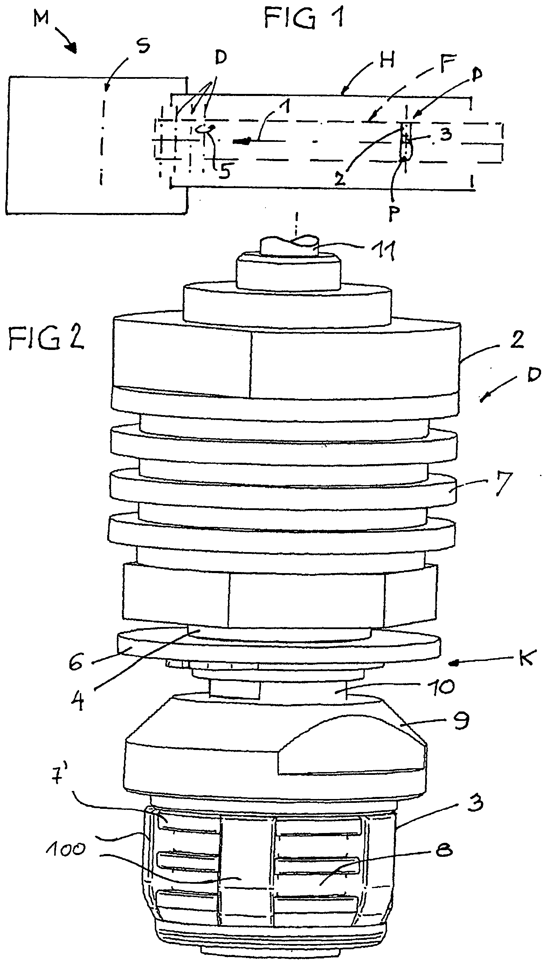

Fig. 1 verdeutlicht schematisch eine Blasmaschine M für Behälter, beispielsweise eine Streckblasmaschine für Kunststoffflaschen. Eine Blasstation S mit einem nicht gezeigten Blasformstern ist an eine Förderstrecke F angeschlossen, die zumindest bereichsweise durch eine Heizvorrichtung H für aufzuheizende oder thermisch zu behandelnde Preforms P verläuft. Die Förderstrecke F bewegt sich im Betrieb in Förderrichtung 1 und enthält eine Vielzahl eng nebeneinander platzierter Dornvorrichtungen D, jeweils aus einem in der Förderstrecke F transportierbaren, hier hängend montierten Dornhalter 2 und einem daran tauschbar angebrachten Preformdorn 3, auf den jeweils ein Preform P aufsteckbar ist. Die Dornvorrichtungen D werden im Betrieb gegebenenfalls um ihre Achsen in Drehrichtung 5 rotiert.

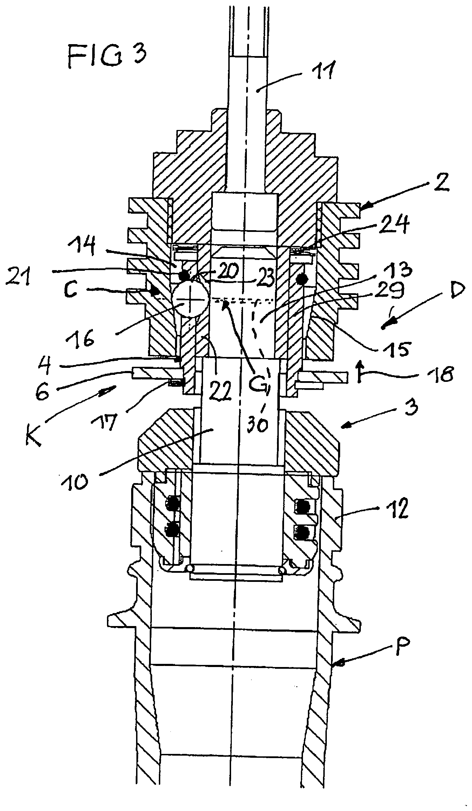

Gemäß Fig. 2 und 3 ist an dem über eine Welle 11 montierten Dornhalter 2 der Preformdorn 3 mittels einer lösbaren Kupplung K tauschbar montiert, um einen Preformdorn 3 für einen Preformtyp mit einem bestimmten Mündungskonzept gegen einen anderen Preformdorn 3 für einen anderen Preformtyp tauschen zu können. Die lösbare Kupplung K ist mittels eines Löseelementes 4 lösbar, an dem eine nach außen ragende Handhabe 6 zum maschinellen oder manuellen Angriff angebracht ist. Der Preformdorn 3 besitzt angrenzend an einen Kopfteil 9 einen oberen Zapfen 10 und am unteren Ende beispielsweise mehrere O-Ringe 8, die mindestens eine Greiferbacke 100 nach außen spreizen zum Halten eines aufgesteckten Preforms P. Am Dornhalter 2 können Kühlrippen 7 geformt sein. Der untere Teil des Kopfteils kann ebenfalls mit Kühlrippen 7' ausgestattet sein. Diese befinden sich im Betrieb innerhalb der Mündung des Preforms, sodass vom Kopfteil Strahlungswärme aufgenommen werden kann, die während des Erwärmungsvorgangs in den Vorformling eingebracht wird. Der Kopfteil 9 ist an seinem unteren Ende mit Greifbacken 100 ausgestattet, die eine Haltekraft auf die Innenoberfläche der Mündung des zu haltenden Preforms auswirken. Die Greifbacken können dabei z.B. mehrere senkrecht in Nuten angebrachte Greifbacken 100, jedoch auch einer oder mehrere in Umfangsrichtung angebrachte Greifbacken 100 sein.

Gemäß Fig. 3 ist ein Kugelgesperre G Hauptbestandteil der lösbaren Kupplung K. Das Kugelgesperre G und das Löseelement 4 sind im Dornhalter 2 angeordnet. Bei einer nicht gezeigten Alternative könnte das Kugelgesperre G wie auch das Löseelement 4 im jeweiligen Preformdorn 3 untergebracht sein.

Die Preform P ist mit ihrer Mündung 12 am Preformdorn 3 festgelegt. Vom Zapfen 10 erstreckt sich über eine Schulter ein weiterer Zapfen 13, der in eine Einsteckaufnahme des Dornhalters 2 einsetzbar und darin mittels des Kugelgesperres G festlegbar ist.

Im Dornhalter 2 ist ein ringförmiger Kugelfreiraum 14 definiert, der außenseitig durch eine schräg oder konisch verlaufende Fläche 15 und innenseitig durch eine Wand 22 des Dornhalters 2 begrenzt wird. Die Fläche 15 ist schräg (in Fig. 3 nach unten) einwärts geneigt und dient als Anzugsfläche für das Kugelgesperre G. Das Kugelgesperre G weist zumindest eine Kugel 16 (oder mehrere in Umfangsrichtung verteilte Kugeln 16) auf, die durch einen Durchgang 23 in der Wand 22 am Zapfen 13 angreift. Der Durchgang 23 ist beispielsweise als sich einwärts verjüngende Senkbohrung ausgebildet, die der Kugel 16 ein gewisses axiales Spiel ermöglicht, jedoch innenseitig kleiner ist als der Kugeldurchmesser. Gegebenenfalls ist im Zapfen 13 im Kugelangriffsbereich eine gestrichelt angedeutete Vertiefung zum Eingriff der Kugel vorgesehen, beispielsweise eine seichte Umfangsnut 30.

Das Löseelement 4 ist eine Hülse 29, die mit einer leichten Gleitpassung auf der Wand 22 verschiebbar geführt wird und sich hier bis über die Kugel 16 hinaus nach oben erstreckt, und unten aus dem unteren Ende des Kugelfreiraums 14 austritt. In der Hülse 29 ist eine Öffnung 20 etwa mit dem Kugeldurchmesser ausgebildet, in der die Kugel einwärts und auswärts verlagerbar ist. Oberseitig angrenzend an die Öffnung 20 ist außenseitig ein die Montage des Kugelgesperres G erleichternder O-Ring 21 in der Hülse 29 platziert. Von oben wirkt auf die Hülse 29 eine Feder 24, beispielsweise eine Wellfeder, mit Vorspannung nach unten ein. Die Handhabe 6 ist bei der gezeigten Ausführungsform ein nach außen vorstehender Ringflansch, der mittels eines Sicherungsringes 17 drehbar auf dem unteren Ende der Hülse 29 montiert ist.

Bei einer nicht gezeigten Alternative könnte die Hülse 29 auch nur von unten an der Kugel 16 angreifen und auf andere Weise ausziehfest im Dornhalter 2 gesichert sein.

Bei einer weiteren, nicht gezeigten Alternative könnte außen am Dornhalter 2 zumindest ein Umlenkhebel angebracht sein, der durch Druck oder Zug quer zur Achse des Dornhalters bewegbar ist, und am Löseelement 4 angreift, um dieses axial zu verstellen. Dieser Hebel lenkt die seitliche Betätigungskraft in die axiale Betätigungskraft des Löseelementes 4 um.

In Fig. 3 ist das Kugelgesperre G in seiner Sperrstellung gezeigt. Jede Kugel 16 liegt mit Druck auf der Fläche 15 auf, und gleichzeitig mit Druck auf den Außenumfang des Zapfens 13. Auf diese Weise wird der Preformdorn 3 gegen Abziehen nach unten gehalten, indem sich jede Kugel 16 im Durchgang 23 und somit in der Wand 22 abstützt.

Um das Kugelgesperre G zu lösen und den Preformdorn 3 zu entnehmen, wird auf das Löseelement 4 aus der gezeigten Passivstellung eine Kraft in Richtung des Pfeiles 18 nach oben ausgeübt, so dass die Kugel 16 entlang der Fläche 15 nach oben bewegt wird, und dadurch ihren Angriff am Zapfen 13 aufgibt. Der Preformdorn 3 fällt dann entweder selbsttätig herab, oder wird von Hand oder mittels eines nicht gezeigten Preformgreifers herausgezogen.

Zum Einsetzen eines neuen Preformdorns 3 braucht nur der Zapfen 13 in die Einsteckaufnahme geschoben zu werden, beispielsweise bis die Schulter zwischen dem Zapfen 10 und dem Zapfen 13 an der Wand 22 ansteht, und zwar ohne das Löseelement 4 zu betätigen, wonach das Kugelgesperre G selbsttätig, z.B. unterstützt durch die Feder 24, die Sperrstellung einnimmt.

Das Löseelement 4 kann manuell betätigt werden, oder maschinell.

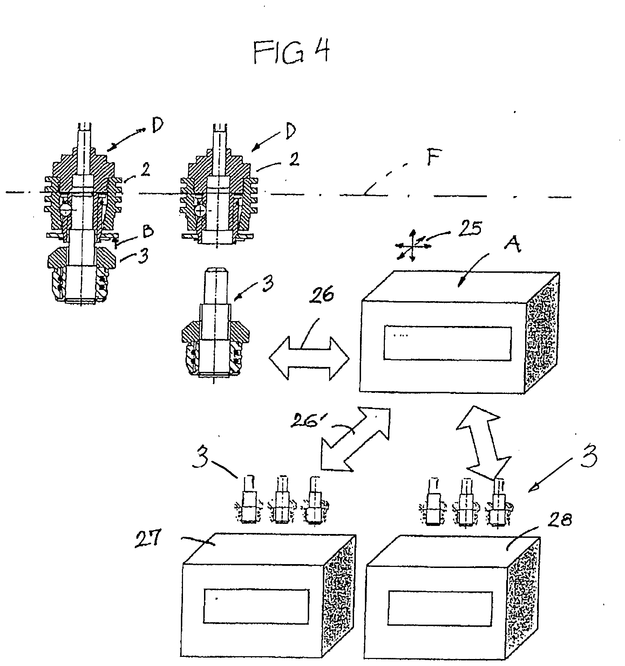

Fig. 4 verdeutlicht ein Wechselsystem für Preformdorne, wobei zwei Dornvorrichtungen D gezeigt sind, von denen die linke noch den Preformdorn 3 im Dornhalter 2 enthält, und gerade ein Betätiger B am Löseelement angreift. Bei der in Fig. 4 rechten Dornvorrichtung D ist der Preformdorn 3 bereits aus dem Dornhalter 2 der Förderstrecke F entnommen.

Zum Einsetzen bzw. Entnehmen des jeweiligen Preformdorns 3 kann ein Wechselautomat oder -Halbautomat A vorgesehen sein, der sich entweder stationär an der Förderstrecke F befindet, oder seitlich an diese verfahrbar und gegebenenfalls andockbar ist, oder sogar mit der Fördervorrichtung mitfahrbar ist (Richtungspfeile 25). Der Automat A kann einen oder mehrere Dorngreifer 26 und antreibbare Betätiger B aufweisen, um jeweils einen oder gleichzeitig mehrere Preformdorne 3 zu wechseln. Der Automat A weist entweder eigene Antriebe für den oder die Dorngreifer 26, 26' und die Betätiger B auf, oder ist auch zum Teil manuell betätigbar, um den jeweiligen Dorngreifer 26, 26' und/oder den jeweiligen Betätiger B beim Wechsel zu bewegen.

Zweckmäßig weist der Automat A zumindest einen Dorngreifer 26, 26' zum Entnehmen von Preformdornen 3 und Ablegen in einem Magazin 27 auf, und wenigstens einen Dorngreifer 26, 26' zum Beschaffen und Einsetzen jeweils eines neuen Preformdorns 3 z.B. aus einem anderen Magazin 28.

Der Automat A kann zum Ausführen beider Wechseltätigkeiten konzipiert sein, oder nur zum Ausführen einer der Wechseltätigkeiten. Zweckmäßig wird der Automat A an einer Stelle der Förderstrecke positioniert, an der die Förderstrecke F umgelenkt und somit die Dornhalter 2 etwas weiter voneinander beabstandet sind als im geraden Verlauf der Förderstrecke. In diesem Bereich ist guter Zugriff zum Löseelement 4 jedes Dornhalters 2 gegeben.

Die Dornvorrichtung D gemäß Fig. 2 und 3 kann auch für andere Maschinen verwendet werden, bei denen ein Gegenstand mittels eines Dorns zu transportieren oder positionieren ist, und bei denen unterschiedliche Dorne gegeneinander tauschbar sind.

## Patentansprüche

1. Blasmaschine (M), geeignet zur Behälterherstellung, insbesondere zur Flaschenherstellung, mit einer Dornhalter (2) tragenden Förderstrecke (F), und mittels lösbarer Kupplungen (K) an den Dornhaltern (2) tauschbar angebrachter Preformdorne (3), wobei jede Kupplung (K) für eine Preformdornhaltefunktion (K) einen Preformdorn-Klemmmechanismus (C) in Form eines Kugelgesperres (G) mit mehreren in Umfangsrichtung verteilten Kugeln (16) und für eine von der Preformdorn-Haltefunktion getrennte Lösefunktion ein von außen zugängliches, zum Lösen des Klemmmechanismus (C) relativ zum Dornhalter (2) verstellbares Löseelement (4) aufweist, **dadurch gekennzeichnet, dass** jede Kugel (16) in einem Durchgang (23) des Dornhalters (2) zwischen einer im Dornhalter (2) in Abziehrichtung des Preformdorns (3) zur Achse des Dornhalters schrägen oder konischen Fläche (15) und einer an einem Ende offenen Preformdorn-Einsteckaufnahme angeordnet ist, dass der Durchgang (23) eine sich von außen nach innen verengende Senkbohrung in einer innen die Preformdorn-Einsteckaufnahme begrenzenden Wand (22) des Dornhalters ist, dass zwischen der Wand (22) und der schrägen oder konischen Fläche (15) ein Kugelfreiraum (14) vorgesehen ist, dass das Löseelement (4) eine vom einen Ende in den Kugelfreiraum (14) eingreifende, verschiebbare und auf der Wand (22) geführte Hülse (29) ist, die im Dornhalter (2) ausziehfest abgestützt und auf die Kugeln (16) ausgerichtet ist, dass sich die Hülse (29) vom einen Ende des Kugelfreiraums bis über die Kugel (16) hinaus erstreckt und eine Öffnung (20) für die Kugel (16) aufweist, in der die Kugel bei der Bewegung der Hülse (29) entlang der schrägen oder konischen Fläche (15) verlagerbar ist, und dass an der Hülse (29) eine die Hülse in Richtung zu einer Passivstellung des Löseelements (4) beaufschlagende Feder (24) angreift.

2. Blasmaschine nach Anspruch 1, **dadurch gekennzeichnet, dass** das Löseelement (4) aus der Passivstellung in etwa in Axialrichtung (18) des Dornhalters (2) relativ zu einem festgelegten Preformdorn (3) in eine Lösestellung bewegbar ist.

3. Blasmaschine nach Anspruch 1, **dadurch gekennzeichnet, dass** der Klemmmechanismus (C) nur in Trennrichtung des Preformdorns (3) sperrt, und der Preformdorn (3) ohne Betätigung des Löseelementes (4) in den Klemmmechanismus (C) einsetzbar ist.

4. Blasmaschine nach Anspruch 1, **dadurch gekennzeichnet, dass** das Löseelement (4) eine zwischen dem Dornhalter (2) und dem Preformdorn (3) nach außen ragende Handhabe (6) für manuellen oder maschinellen Angriff aufweist.

5. Blasmaschine nach Anspruch 4, **dadurch gekennzeichnet, dass** ein bei einem Angriff in etwa quer zur Axialrichtung die Angriffsbewegung in Axialrichtung umlenkendes Hilfselement für eine Verstellung des Löseelementes (4) vorgesehen ist.

6. Blasmaschine nach Anspruch 1, **dadurch gekennzeichnet, dass** der Preformdorn (3) mit einem Zapfen (13) in der Preformdorn-Einsteckaufnahme des Klemmmechanismus (C) festlegbar ist.

7. Blasmaschine nach Anspruch 1, **dadurch gekennzeichnet, dass** angrenzend an die Kugelöffnung (20) in der Hülse (29) außen ein O-Ring (21) auf der Hülse (29) positioniert ist.

8. Blasmaschine nach Anspruch 4, **dadurch gekennzeichnet, dass** die Handhabe (6) ein nach außen stehender, relativ zur Hülse (29) drehbarer Ringflansch am außenliegenden Ende der Hülse (29) ist.

9. Blasmaschine gemäß wenigstens einem der vorhergehenden Ansprüche, **dadurch gekennzeichnet, dass** an der Förderstrecke (F) zumindest ein das Löseelement (4) bzw. die Handhabe (6) betätigender Dorn-Wechselautomat oder -Halbautomat (A) angeordnet ist, der, vorzugsweise, stationär oder seitlich an die Förderstrecke (F) bringbar und/oder andockbar und/oder parallel zur Förderrichtung (1) verfahrbar ist.

10. Blasmaschine gemäß Anspruch 9, **dadurch gekennzeichnet, dass** der Dorn-Wechselautomat oder -Halbautomat (A) einen antreibbaren Betätiger (B) für das Löseelement (4) und, vorzugsweise, einen motorisch, pneumatisch oder manuell betätigbaren Preformdorngreifer (26) aufweist, und dass dem Preformdorngreifer (26) ein Magazin (27, 28) für Preformdorne (3) zugeordnet ist.

11. Blasmaschine gemäß Anspruch 10, **dadurch gekennzeichnet, dass** der Preformdorngreifer (26) zum Entnehmen eines Preformdorns (3) vom und zum Aufnehmen und Einsetzen eines Preformdorns (3) in den Dornhalter (2) antreibbar ist.

12. Blasmaschine gemäß Anspruch 9, **dadurch gekennzeichnet, dass** im selben oder in wenigstens einem weiteren Dorn-Wechselautomaten oder -Halbautomaten (A) ein zum Aufnehmen und Einsetzen von Preformdornen (3) in Dornhalter (2) antreibbarer Dorngreifer (26') vorgesehen ist.

## Claims

1. Blow molding machine (M) adapted to produce containers, in particular to produce bottles, comprising a conveyor path (F) carrying mandrel holders (2) and preform-mandrels (3) exchangeably attached by releasable couplings (K) at the mandrel holders (2), wherein each coupling (K) for a preform-mandrel holding function comprises a preform-mandrel clamping mechanism (C) in the form of a ball joint lock (G) with several balls (16) distributed in the circumferential direction and for a release function separated from the preform-mandrel holding function a release element (4) accessible from outside that can be adjusted relative to the mandrel holder (2) for releasing the clamping mechanism (C), **characterized in that** each ball (16) is arranged in a passage (23) of the mandrel holder (2) between a surface (15) arranged obliquely or conically with respect to the axis of the mandrel holder (2) in the pull-off direction of the preform mandrel (3) and a mandrel push-in seat that is open at one end, that the passage (23) is a counterbore tapering from the outside to the inside in an inner wall (22) of the mandrel holder (2) limiting the mandrel push-in seat, that a ball clearance zone (14) is provided between the wall (22) and the oblique or conical surface (15), that the release element (4) is a movable sleeve (29) that engages in the ball clearance zone (14) from the one end and is moveably guided on the wall (22), the sleeve is directed towards the balls (16) and is supported in the mandrel holder (2) such that it cannot be pulled out, that the sleeve (29) extends from the one end of the ball clearance zone (14) beyond the respective ball (16) and comprises an opening (20) for the ball (16) into which the ball (16) can be displaced during the movement of the sleeve (29) along the oblique or conical surface (15), and that a spring (24) engages at the sleeve (29) actuating the sleeve (29) in the direction towards a passive position.

2. Blow molding machine according to claim 1, **characterized in that** the release element (4) can be moved from the passive position relatively to a fixed preform-mandrel (3) approximately in the axial direction (18) of the mandrel holder (2) into a release position.

3. Blow molding machine according to claim 1, **characterized in that** the mandrel-clamping mechanism (C) only locks in a separating direction of the preform mandrel (3), and that the preform mandrel (3) can be inserted into the clamping mechanism (C) without actuation of the release element (4).

4. Blow molding machine according to claim 1, **characterized in that** for a manual or mechanical actuation the release element (4) comprises a handle (6) projecting outwards between the mandrel holder (2) and the pre-form mandrel (3).

5. Blow molding machine according to claim 4, **characterized in that** for displacing the release element (4) an auxiliary element is provided diverting an actuation movement when actuated approximately transverse to the axial direction in the axial direction.

6. Blow molding machine according to claim 1, **characterized in that** the preform-mandrel (3) can be fixed with a peg (13) in the preform-mandrel push-in seat of the clamping mechanism (C).

7. Blow molding machine according to claim 1, **characterized in that** an O-ring (21) is positioned at the outside of the sleeve (29) adjacent to the ball opening (20) in the sleeve (29).

8. Blow molding machine according to claim 4, **characterized in that** the handle (6) is a ring flange projecting outwardly at the outer end of the sleeve (29) and being rotatable relative to the sleeve (29).

9. Blow molding machine according to at least one of the preceding claims, **characterized in that** at least one automatic or semiautomatic mandrel change machine (A) for actuating the release element (4) or the handle (6) is arranged at the conveyor path (F) which can, preferably, be stationarily or laterally brought and/or docked to the conveyor path (F) and/or can be moved in parallel to the conveying direction (1).

10. Blow molding machine according to claim 9, **characterized in that** the automatic or semiautomatic mandrel change machine (A) comprises a drivable actuator (B) for the release element (4) and, preferably, a motively, pneumatically or manually actuable preform-mandrel gripper (26), and that a magazine (27, 28) for preform-mandrels (3) is allocated to the preform-mandrel gripper (26).

11. Blow molding machine according to claim 10, **characterized in that** the preform-mandrel gripper (26) can be driven to remove a preform-mandrel (3) from the mandrel holder (2) and to pick-up and insert a preform-mandrel (3) into the mandrel holder (2).

12. Blow molding machine according to claim 9, **characterized in that** in the same or in at least one further automatic or semiautomatic mandrel change machine (A), a mandrel gripper (26') is provided which can be driven to pick-up and insert preform-mandrels (3) in preform-mandrel holders (2).

## Revendications

1. Machine de moulage par soufflage (M) adaptée à la fabrication de contenants, notamment pour la fabrication de bouteilles, comprenant un parcours de transport (F) portant des supports de mandrin (2), et des mandrins de préforme (3) rapportés de manière interchangeable sur les supports de mandrin (2) au moyen d'accouplements (K) pouvant être ouverts, machine de moulage par soufflage
dans laquelle chaque accouplement (K) présente pour une fonction de maintien de mandrin de préforme (K), un mécanisme de serrage de mandrin de préforme (C), sous la forme d'un système de verrouillage à billes (G) avec plusieurs billes (16) réparties dans la direction périphérique, et pour une fonction de déblocage, séparée de la fonction de maintien de mandrin de préforme, un élément de déblocage (4) accessible de l'extérieur, qui peut être déplacé par rapport au support de mandrin (2) pour débloquer le mécanisme de verrouillage (C),
**caractérisée**
**en ce que** chaque bille (16) est agencée dans un passage (23) du support de mandrin (2), entre une surface (15) inclinée ou conique vers l'axe du support de mandrin dans la direction d'extraction du mandrin de préforme (3) dans le support de mandrin (2), et un emplacement d'accueil d'insertion de mandrin de préforme ouvert à une extrémité,
**en ce que** le passage (23) est une fraisure se rétrécissant de l'extérieur vers l'intérieur dans une paroi (22) du support de mandrin, qui délimite l'emplacement d'accueil d'insertion de mandrin de préforme,
**en ce qu'**entre la paroi (22) et la surface inclinée ou conique (15), il est prévu un espace libre de bille (14),
**en ce que** l'élément de déblocage (4) est une douille (29), qui s'engage par une extrémité dans l'espace libre de bille (14), est coulissante et guidée sur la paroi (22), et qui est retenue à l'encontre de son extraction dans le support de mandrin (2) et est orientée en direction des billes (16),
**en ce que** la douille (29) s'étend de ladite une extrémité de l'espace libre de bille jusqu'au-delà de la bille (16) et présente une ouverture (20) pour la bille (16), dans laquelle la bille peut être déplacée le long de la surface inclinée ou conique (15) lors du mouvement de déplacement de la douille (29),
et **en ce que** sur la douille (29) agit un ressort (24) sollicitant la douille en direction d'une position passive de l'élément de déblocage (4).

2. Machine de moulage par soufflage selon la revendication 1, **caractérisée en ce que** l'élément de déblocage (4) peut être déplacé de la position passive, sensiblement dans la direction axiale (18) du support de mandrin (2), par rapport à un mandrin de préforme (3), jusqu'à une position de déblocage.

3. Machine de moulage par soufflage selon la revendication 1, **caractérisée en ce que** le mécanisme de serrage (C) ne verrouille que dans la direction de séparation du mandrin de préforme (3), et le mandrin de préforme (3) peut être inséré dans le mécanisme de serrage (C) sans actionnement de l'élément de déblocage (4) .

4. Machine de moulage par soufflage selon la revendication 1, **caractérisée en ce que** l'élément de déblocage (4) présente un moyen de manoeuvre (6) faisant saillie radialement vers l'extérieur entre le support de mandrin (2) et le mandrin de préforme (3), et destiné à être actionné manuellement ou mécaniquement de manière automatique.

5. Machine de moulage par soufflage selon la revendication 4, **caractérisée en ce que** pour un déplacement de l'élément de déblocage (4), il est prévu un élément auxiliaire, qui, pour un actionnement sensiblement transversal à la direction axiale, transforme le mouvement d'actionnement en un mouvement dans la direction axiale.

6. Machine de moulage par soufflage selon la revendication 1, **caractérisée en ce que** le mandrin de préforme (3) peut être fixé avec un tenon (13) dans l'emplacement d'accueil d'insertion de mandrin de préforme du mécanisme de serrage (C).

7. Machine de moulage par soufflage selon la revendication 1, **caractérisée en ce que** de manière adjacente à l'ouverture de bille (20) dans la douille (29), un joint torique (21) est positionné à l'extérieur sur la douille (29).

8. Machine de moulage par soufflage selon la revendication 4, **caractérisée en ce que** le moyen de manoeuvre (6) est un flasque annulaire pouvant tourner par rapport à la douille (29), à l'extrémité de la douille (29, qui est située à l'extérieur.

9. Machine de moulage par soufflage selon l'une des revendications précédentes, **caractérisée en ce que** sur le parcours de transport (F) est agencé un automate ou semi-automate d'échange de mandrin (A), qui actionne l'élément de déblocage (4) ou le moyen de manoeuvre (6), et qui, de préférence est stationnaire ou peut être amené latéralement contre le parcours de transport (F), et/ou peut y être amarré et/ou peut être déplacé parallèlement à la direction de transport (1).

10. Machine de moulage par soufflage selon la revendication 9, **caractérisée en ce que** l'automate ou semi-automate d'échange de mandrin (A) présente un actionneur (B) pouvant être entraîné, pour l'élément de déblocage (4), et, de préférence, un préhenseur de mandrin de préforme (26) pouvant être actionné par moteur, de manière pneumatique ou manuelle, et **en ce qu'**au préhenseur de mandrin de préforme (26) est associé un magasin (27, 28) pour des mandrins de préforme (3).

11. Machine de moulage par soufflage selon la revendication 10, **caractérisée en ce que** le préhenseur de mandrin de préforme (26) peut être entraîné pour prélever un mandrin de préforme (3) du support de mandrin (2) et pour accueillir et insérer un mandrin de préforme (3) dans le support de mandrin.

12. Machine de moulage par soufflage selon la revendication 9, **caractérisée en ce que** dans le même ou dans au moins un autre automate ou semi-automate d'échange de mandrin (A), il est prévu un préhenseur de mandrin (26') pouvant être entraîné et destiné à accueillir et insérer des mandrins de préforme (3) dans des supports de mandrin (2).
